**Europäisches Patentamt**

**European Patent Office**

**Office européen des brevets**

(11) Veröffentlichungsnummer: **0 135 000**
**B1**

(12) **EUROPÄISCHE PATENTSCHRIFT**

(45) Veröffentlichungstag der Patentschrift: **12.09.90**

(51) Int. Cl.$^5$: **G 01 B 9/02**, G 01 B 11/02

(21) Anmeldenummer: **84108100.3**

(22) Anmeldetag: **11.07.84**

(54) **Längenmessvorrichtung nach dem Zweistrahl-Laser-Interferometerprinzip.**

(30) Priorität: **15.07.83 DE 3325549**

(43) Veröffentlichungstag der Anmeldung:
**27.03.85 Patentblatt 85/13**

(45) Bekanntmachung des Hinweises auf die
Patenterteilung:
**12.09.90 Patentblatt 90/37**

(84) Benannte Vertragsstaaten:
**AT BE CH DE FR GB IT LI LU NL SE**

(56) Entgegenhaltungen:
DE-A-2 234 146
DE-A-3 124 357
DE-A-3 131 232
JP-A-5 660 306
US-A-3 930 730
APPLIED PHYSICS LETTERS, vol. 38, No. 2, 15
Jan. 1981, Seiten 77-78
Die Akte enthält technische Angaben, die nach
dem Eingang der Anmeldung eingereicht
wurden und die nicht in dieser Patentschrift
enthalten sind.

(73) Patentinhaber: **Dimetec GmbH & Co. KG**
**Alte Hohenzeller Strasse 20**
**D-6490 Schlüchtern (DE)**

(72) Erfinder: **Röth, Rudolf Manfred**
**Salmünstererweg 2**
**D-6490 Schlüchtern-1 (DE)**
Erfinder: **Werckmeister, Claus**
**Auf der Röthe 5**
**D-6490 Schlüchtern-1 (DE)**

(74) Vertreter: **Zapfe, Hans, Dipl.-Ing.**
**Am Eichwald 7, Postfach 20 01 51**
**D-6056 Heusenstamm 2 (Rembrücken) (DE)**

(56) Entgegenhaltungen:
**ANNALS OF THE CIRP, Vol. 28/1/1979, Seiten**
**311-316**

**APPLIED OPTICS, vol. 20, No. 20, 15 Oct. 1981,**
**Seiten 3520-3525**

**IEEE JOURNAL OF QUANTUM ELECTRONICS,**
**vol. QE-17, No. 7, July 1981, Seiten 1251-1255,**
**1258**

**Beschreibung**

Die Erfindung betrifft eine Längenmeßvorrichtung nach dem Zweistrahl-Laser-Interferometerprinzip.

Dandridge u.a. beschreiben in dem Aufsatz "Single-mode diode laser phase-noise" in Appl. Phys. Lett. 38 (2), vom 15. Januar 1981, Seiten 77/78, eine Interferometer-Anordnung zur Untersuchung des Laser-Rauschens, bei der eine Laser-Diode Hitachi 1400 CSP verwendet wird, die laut Datenblatt eine Emissionswellenlänge zwischen 820 und 880 nm hat. Die Diode wurde jedoch in unstabilisiertem Zustand bzw. freilaufend betrieben, und der Rauschpegel wurde in Abhängigkeit von der Weglängendifferenz untersucht, die bis zu 40 cm betrug. Aufgrund der Betriebsweise lag die Kohärenzlänge in der Größenordnung von 30 μm, so daß eine Eignung für Längenmeßgeräte gleichfalls nicht zu erkennen ist. Der Verschiebeweg des Spiegels von bis zu 40 cm enthält jedefalls keine Aussage über die Kohärenzlänge. Rau-schen führt grundsätzlich zu mangelndem Kontrast der Interferenzerscheinungen, so daß eine Zählung der Hell-Dunkel-Übergänge weder möglich noch überhaupt vorgesehen war. Dem Aufsatz ist zu entnehmen, das die Differenzweglänge grundsätzlich klein zu halten ist, was bei Längenmeßgeräten nach Michelson mit brauchbar großen Meßbereichen schlechterdings unmöglich ist. Infolgedessen ist die bekannte Vorrichtung weder zur Längenmessung vorgesehen, noch hierzu geeignet. Der vorhandene piezoelektrische Zylinder dient nämlich dazu, das Interferenzsignal "in Quadratur" zu halten, was im Klartext bedeutet, daß keine durchlaufenden Interferenzstreifen entstehen können (und auch nicht dürfen), die durch Zählung in Verbindung mit einer definierten Wellenlänge zur Bestimmung eines Verschiebeweges hätten dienen können. Der Einfluß von Längenänderungen im System, z.B. durch Verschieben von Spiegeln, ist unerwünscht und wird daher konsequent vermieden. Bei der bekannten Vorrichtung wird ein äußerer akustischer Einfluß durch eine Isolationsplattform und die Unterbringung in einer Kammer verringert, die ihrerseits auf einem Antivibrationstisch montiert ist. Zusätzlich kann diese Kammer evakuiert werden. Mit der Evakuierung könnten zwar zusätzlich Umgebungseinflüsse (wie Druck, Temperatur und Feuchte) im Strahlengang beeinflußt werden. Ein Vakuum setzt jedoch wiederum geregelte Pumpen voraus, und die Vakuumkammer mit den angeschlossenen Pumpen, die Isolationsplattform und der Antivibrationstisch erschweren die Handhabbarkeit bei der Verwendung als Längenmeßvorrichtung. Dadurch ist es aber immer noch nicht möglich, den Einfluß der Betriebsparameter der Laserdiode regelungstechnisch oder rechnerisch zu kompensieren.

Als Lagemelder wird bei einer Längenmeßvorrichtung nach dem Anspruch 1 dasjenige bewegliche Teil der Meßvorrichtung bezeichnet, das die Position des Meßobjekts erfaßt, also beispielsweise ein Taststift, der auf eine Werkstückoberfläche aufsetzbar ist, oder ein bewegliches Teil einer Werkzeugmaschine, an dem der bewegliche Spiegel des Interferometers befestigt ist.

Derartige Meßvorrichtungen sind mit unterschiedlichen Ausführungsbeispielen in dem Aufsatz von Kunzmann "Anwendung der Laser-Interferometers in der Fertigungsmeßtechnik" in "Annals of the CIRP Vol. 28/1/1979", Seiten 311 bis 316 beschrieben. Es ist dabei möglich, entweder einen Strahlenteiler und zwei Reflektoren zu verwenden, oder aber zwei Strahlenteiler und einen Reflektor. Eine sehr bekannte Meßvorrichtung ist das sogenannte Michelson-Interferometer, das gleichfalls in der genannten Literaturstelle beschrieben ist.

Bei derartigen Interferometern wird ein Lichtstrahl in zwei Teilstrahlen aufgespalten, von denen der eine als Referenzlichtstrahl und der andere als Meßlichtstrahl bezeichnet werden kann. Als Strahlenteiler kann hierbei ein halbdurchlässiger Spiegel verwendet werden, der unter einem Winkel von 45 Grad im Strahlengang angeordnet ist, oder ein Würfel, der aus zwei Prismen zusammengekittet ist, wobei die Kittfläche gleichfalls unter einem Winkel von 45 Grad im Strahlengang angeordnet ist.

Meß- und Referenzlichtstrahl werden nach dem Zurücklegen unabhängiger Wegstrecken zu einem Interferenzstrahl wieder-vereinigt und interferieren auf diese Weise. Je nach Phasenlage der beiden Teilstrahlen zueinander kann der Interferenzstrahl einen Amplitudenwert zwischen der Summe der Einzelamplituden (konstruktive Interferenz) und Null (destruktive Interferenz) annehmen. Bei einer kontinuierlichen Bewegung des beweglichen Spiegels durchläuft das Inferenzsignal eine Folge von Signalen unterschiedlicher Helligkeit (sogenannte Interferenzringe oder -streifen), die von einem Fotodetektor erfaßt und in eine elektrische Impulsfolge umgesetzt werden können. Durch zwei hinsichtlich der Phasenlage gegeneinander versetzte Fotodetektoren werden nicht nur die Hell-Dunkel-Obergänge erfaßt, sondern es wird zusätzlichauch noch die Verschieberichtung des beweglichen Spiegels bewertet. Der Verschiebeweg "s" des beweglichen Spiegels ergibt sich aus der Zahl der Null-Durchgänge "m" und der Lichtwellenlänge "λ" zu

$$s = m \frac{\lambda}{2}.$$

Die Anzahl der Hell-Dunkel-Übergänge ist also ein Maß für den Verschiebeweg des beweglichen Spiegels relativ zu den feststehenden optischen Elementen. Diese Methode der interferometrischen Längenmessung ist in die Gruppe der inkrementalen Messungen einzureihen.

Für ein sauberes Interferenzsignal muß der Aufbau so ausgerichtet sein, daß die beiden Teilstrahlen genau parallel und mit übereinstimmender Polarisationsrichtung zusammentreffen. Die Verwendung von sogenannten Retro-Reflektoren als Spiegel, beispielsweise von sogenannten Tripel-Spiegeln, sorgt dafür, daß der einfallende Strahl stets parallel zum reflektierten Strahl orientiert ist. Ferner ist es notwendig, durch geeigneten Parallelversatz zu verhindern, daß reflektiertes Licht zurück in die Lichtquelle gelangt und dort Interferenzstörungen verursacht.

Die vorstehenden Betrachtungen gehen davon aus, daß die verwendete Lichtquelle einen unendlich langen Wellenzug von exakt einer Frequenz aussendet. In der Praxis liefert eine Lichtquelle ein Gemisch aus örtlich begrenzten Lichtteilchen, sogenannten Photonen verschiedener Polarisation und Frequenz. Selbst streng monochromatische Lichtquellen wie Laser besitzen eine gewisse Bandbreite in der Frequenz. Diese Bandbreite ist die Ursache dafür, daß die Photonen des Lichtstrahls nicht räumlich beliebig weit die für eine Interferenz notwendige feste Phasenbeziehung aufweisen. Die Strecke, über die diese feste Phasenbeziehung besteht, wird als Kohärenzlänge bezeichnet. Sie ist um so größer, je schmaler die Frequenzbandbreite des Lasers ist. Die Kohärenzlänge bildet also die Maximalgrenze der Weglängendifferenz der beiden Teilstrahlen, d.h. das Zweifache des Verfahrwegs eines Spiegels bzw. Reflektors.

Überschreitet die Weglängendifferenz den zulässigen Wert, so sinkt der Kontrast im Interferenzsignal soweit ab, daß ein Zählen der Hell-Dunkel-Übergänge nicht mehr möglich ist. Einen, ähnlichen, aber räumlich periodischen Effekt im Kontrast bewirkt die Emission mehrerer diskreter, jeweils schmalbandiger Frequenzmoden. Die Lage der einzelnen Moden und die Kontur des sogenannten Verstärkungskurve (=Hüllkurve der Intensitätsmaxima) sind durch die Temperatur und andere äußere Parameter stark zu beeinflussen. Besonders die Temperaturanfälligkeit der Frequenzstabilität führt zu der Notwendigkeit, die Ausgangsleistung der Lichtquelle durch einen Regelkreis konstant zu halten. Es ist also anzustreben, die einzelnen Mode erheblich gegenüber den Nachbarmoden zu verstärken.

Eine weitere Voraussetzung für guten Kontrast im Interferenzsignal ist die annähernde Intensitätsgleichheit der beiden Teilstrahlen. Da die optischen Weglängen der beiden Teilstrahlen voneinander verschieden sind, muß die Lichtquelle einen möglichst gut gebündelten Lichtstrahl aussenden.

Die eingangs zitierte Literaturstelle von Kunzmann nennt auf Seite 311 als Lichtquelle für das Laser-Interferometer einen Helium-Neon-Laser, d.h. einen sogenannten Gas-Laser. Derartige Laser sind jedoch für die praktische Anwendung in der Fertigungsmeßtechnik mit einigen Nachteilen behaftet: Die thermischen Einflüsse, das Erhitzen der Laserröhre, und die Kapselung der relativ großen Aggregate führen zu Meßgeräten mit großen Abmessungen und von hohem Gewicht, die für manuelle Messungen nicht mehr eingesetzt werden können. Die bekannten Gaslaser bedingen umfangreiche Einrichtungen bzw. Hilfsaggregate zur Regelung, und insbesondere zur Kühlung, die das Bauvolumen weiter vergrößern.

Die beim Einsatz der bekannten Gaslaser auftretenden Probleme in der Meßstrecke durch Öldämpfe, Staubpartikel und sonstige Verunreinigungen haben eine störenden Einfluß auf das Meßergebnis.

Der Erfindung liegt daher die Aufgabe zugrunde, eine Meßvorrichtung der eingangs beschriebenen Gattung anzugeben, die bei einer zuverlässigen Messung nach dem Interferometer-Prinzip auch über größere Wegstrecken, d.h. im Dezimeter- und Meter-Bereich, Abmessungen aufweist, die sehr viel kleiner sind als diejenigen der bekannten Meßvorrichtungen mit Gas-Lasern und die keine umfangreichen Hilfsaggregate für den eigentlichen Laser-Betrieb bedingen.

Die Lösung der gestellten Aufgabe erfolgt erfindungsgemäß durch die im Patentanspruch 1 angegebenen Merkmale.

Durch den Erfindungsgegenstand sind Absolutmessungen möglich, d.h. Messungen gegenüber Bezugspunkten, die in der Meßvorrichtung vorgebbar sind, und es bedarf beim Meßbetrieb keiner Referenzmaßstäbe. Es sind abder vor allem Absolutmessungen über große Weglängen im Dezimeter- und Meterbereich möglich, wie dies früher nur mit Gas-Lasern möglich war.

Die Verwendung von Halbleiterlasern bzw. Laser-Dioden in einigen speziellen Meßgeräten, zu denen jedoch keine Längenmeßgeräte für Absolutmessungen gehören, ist an sich bekannt: Durch die DE—OS 31 31 232 ist eine Halbleiter-Ringlaser-Vorrichtung bekannt, die ein sogenanntes Gyroskop bildet. Bei einem solchen Gerät laufen zwei Laserlichtstrahlen gegenläufig in einem Kreis oder Polygon mit einer zunächst festen Phasenbeziehung. Wenn der Kreis bzw. das Polygon gedreht wird, dann ergibt sich eine äußerst geringe Phasenverschiebung, die kleiner ist als eine Wellenlänge, so daß eine Zählung der Hell-/Dunkel-Übergänge nicht vorgesehen ist. Vielmehr ist die Phasenverschiebung die eigentliche Meßgröße. Eine größere Kohärenzlänge ist bei derartigen Gyroskopen auch nicht erwünscht, da als dann Störeinflüsse durch Streuung und Überlagerung auftreten würden. Der Verzicht auf eine größere Kohärenzlänge wird dadurch erreicht, daß die Reflektorflächen an den Enden des Wellenleiters unter einem deutlich von 90 Grad verschiedenen Winkel zur Längsachse des Wellenleiters ausgerichtet sind. Auf diese Weise entsteht kein mono-modiges Laserlicht, und die Kohärenzlänge liegt deutlich unter einem Millimeter. Der bekannte Laser ist eine Sonderanfertigung und für Längemeßgeräte nicht verwendbar.

Durch den Aufsatz "Fiber Optic Sensors" von Taylor u.a., veröffentlich anläßlich der "First European Conference on Integrated Optics", von The Institution of Electrical Engineers, 1981, Seiten 99 bis 101, ist es bekannt, mono-modige Laser-Dioden in Verbindung mit Faser-Optiken für die Messung von Schalldrücken, Magnetfeldern, Beschleunigungen, Temperaturen und Drehungen einzusetzen.

Hierbei werden Medien verwendet, die unter den vorstehend genannten Einflüssen äußerst geringfügige Längenänderungen erleiden, so daß wiederum Wegdifferenzen zwischen den interferierenden Strahlen auftreten, die kleiner als eine Wellenlänge sind, so daß zur Vermeidung von Störeinflüssen wiederum kleine Kohärenzlängen anzustreben sind. Es handelt sich auch in diesem Fall um Längen- bzw. Phasenänderungen, die sich im µm- bzw. 2π -Bereich abspielen, so daß eine Eignung der beschriebenen Anordnungen für Längenmessungen nicht gegeben ist.

In dem Aufsatz von Petermann/Weidel "Semiconductor Laser Noise in an Interferometer System", veröffentlicht in "IEEE Journal of Quantum Electronics", Juli 1981, Seiten 1251 bis 1256, ist gleichfalls eine Anordnung zur Messung des Laser-Rauschens beschrieben, die von dem Michelson-Prinzip Gebrauch macht. Petermann beschreibt einen Multi-Mode-Laser (10 Moden), der für Längenmessungen gleichfalls ungeeignet ist, und kommt zu dem Schluß, daß zur Verringerung des Rauschens die Weglängen in den beiden Interferometer-Zweigen so gleich wie irgend möglich sein sollen. Wie bereits einleitend gesagt, ist dies bei Längenmeßgeräten mit brauchbaren Meßbereichen nicht durchführbar. Im übrigen bestätigen Petermann/Weidel sehr weitgehend die Aussagen von Dandridge.

Die Erkenntnisse von Dandridge u.a. und Petermann/Weidel wurden ganz offensichtlich auch bei der gattungsfremden Meßmaschine nach der JA—OS 56-60306 berücksichtigt, die einen Halbleiter-Laser besitzt und bei der die Weglängendifferenz gleichfalls minimal ist, der Meßbereich allerdings auch. Bei dieser bekannten Meßmaschine sind der Laser, der halbdurchlässige Spiegel und beide Reflektoren gemeinsam in einem Gehäuse untergebracht und mittels eines Spindeltriebs in Richtung auf das Meßobjekt und zwei unterschiedliche Referenzmaßstäße verschiebbar. Zur Vermessung des Meßobjekts müssen drei Messungen durchgeführt werden, nämlich eine am Meßobjekt selbst und zwei an den beiden Referenzmaßstäben, und nachfolgend muß eine Rechnung nach einer angegebenen Formel durchgeführt werden, bei der die Wellenlänge des Lasers eliminiert wird. Es handelt sich also um eine Relativmessung gegenüber zwei Bezugspunkten die außerhalb des Laser-Systems liegen. Ein Meßvorgang ist also kompliziert, von der Genauigkeit des Spindeltriebs und zweier Referenzmaßstäbe abhängig, und außerdem ist der allein mit dem Lasersystem erfaßbare Meßbereich sehr klein; er besteht nur aus der geringen Relativbewegung des Meßtasters gegenüber dem Gehäuse. Die einzige Regeleinrichtung beeinflußt die Temperatur des Lasers, der weitere Betriebsparameter Injektionsstrom und die Umgebungsparameter Druck, Feuchte und Temperatur können nur innerhalb sehr enger Grenzen durch die Rechnung erfaßt werden. Für größere Verschiebewege, d.h. größere Meßbereiche und damit für Absolutmessungen ist das bekannte System gleichfalls nicht brauchbar. Bei längeren und insbesondere unterschiedlich langen Strahlengängen entsteht nämlich wieder das früher unvermeidbare Rauschen, das eine größere Kohärenzlänge und damit die Auswertbarkeit bzw. Zählung einer großen Zahl von Hall-Dunkel-Folgen verhindert.

Laser-Dioden werden beispielsweise unter der Bezeichnung "Collimator-Pen" CQL 13 A von der Firma VALVO sowie unter den Serienbezeichnungen HLP 1000, HLP 2000 und HLP 3000 von der Firma Hitachi vertrieben. Als Anwendungsgebiete sind jedoch artfremde Sachgebiete angegeben. Die bekannten Laser-Dioden sind als Lichtquellen für Glasfaser-Optiken, sowie für die Abtastung von Bild- und Tonplatten, Datenübertragung und -speicherung, Alarmanlagen etc. vorgesehen.

Als besonders gut geeignet hat sich für die erfindungsgemäße Lösung die unter der Bezeichnung HLP 7801 E von der Firma Hitachi vertriebene Laser-Diode erwiesen. Sie wird gleichfalls für die Abtastung von Bild- und Tonplatten angeboten und hat eine für diesen Zweck an sich nicht erforderliche Kohärenzlänge von etwa 2 bis 3 Metern und ist zudem außerordentlich billig, da ihr Preis weniger als 10% des Preises der weiter oben genannten Laser-Dioden beträgt. Die Laser-Diode HLP 7801 E hat nämlich den Vorteil, daß ihre Betriebsbedingungen (Betriebstemperatur, Injektionsstrom) auf Werte einstellbar sind, die zu einer Emissionswellenlänge von praktisch genau 800 nm führen. Diese Wellenlänge läßt sich außerordentlich einfach in einem Binär-System verarbeiten und führt ohne großen Rechenaufwand zu unmittelbar auswertbaren Zählergebnissen.

Es wurde überraschend gefunden, daß sich derartige Laser-Dioden, die einschließlich eines bereits eingebauten Kollimators Längenabmessungen von etwa 20 mm bei Durchmessern von 6 bis 8 mm aufweisen, hervorragend als Laser-Lichtquellen für Längenmeßvorrichtungen nach dem Zweistrahl-Interferometer-Prinzip eignen. Sie genügen trotz des einfachen Aufbaus und der einfachen Betriebsbedingungen den eingangs beschriebenen Anforderungen an die für Meßvorrichtungen benötigten Laser-Lichtquellen. Sie haben insbesondere auch die für derartige Meßvorrichtungen unerläßliche große Kohärenzlänge.

Die Laser-Diode HLP 7801 E von Hitachi emittiert bei einer Ausgangsleistung von etwa 5 Milliwatt überwiegend einen Mode der Wellenlänge um 800 nm, d.h. das Maximum dieses Mode hebt sich um ein Vielfaches von den Maxima der benachbarten Mode ab. Dabei liegt der Lichtstrahl im Infrarotbereich und ist für das Auge unsichtbar.

Bei Längemessungen, deren realtive und absolute Fehler äußerst klein gehalten werden müssen, sind noch weitere Einflußgrößen zu beachten: Die Emissionswellenlänge von Laser-Dioden hängt von ihrer Betriebstemperatur sowie vom sogenannten Injektionsstrom (Betriebsstrom) ab. Grundsätzlich sind also diese Betriebsparameter innerhalb bestimmter, möglichst enger Grenzen auf definierte und konstante Werte einzustellen bzw. einzuregeln. Es wird noch aufgezeigt werden, daß man den diesbezüglichen Aufwand in Grenzen halten kann, wenn man gegebenenfalls zusätzlich oder ausschließlich die Auswirkungen von Intensitäts- und Wellenlängen-Änderungen der Laser-Diode innerhalb der Auswerteschaltung kompensiert.

Weiterhin ist für die Ausbreitung der Laser-Strahlen die Dichte des Mediums im Strahlengang maßgebend, die wiederum durch Druck, Temperatur und Feuchte bestimmt wird.

Die Lösung besitzt somit erfindungsgemäß außer der beschriebenen Laser-Diode mindestens eine Einrichtung zur Beseitigung der Einflüsse von Betriebs- und Umgebungsparameter. Hierfür gibt es die nachstehend noch näher erläuterten Ausführungsbeispiele:

Einmal läßt sich die Laser-Dioden leicht mit einer Einrichtung zur Stabilisierung ihrer Betriebstemperatur versehen. Beispielsweise kann die Laser-Diode mit einem Peltier-Element verbunden werden. Hierbei wird die Temperatur der Laser-Diode mit einem Temperaturfühler erfaßt und das Peltier-Element über einen zugeordneten Regelkreis entsprechend angesteuert. Bei dem heutigen Stand der Technik läßt sich die Temperatur ohne weiteres auf ±0,1 K stabilisieren, erforderlichenfalls sogar auf 0,01 K. In dem zuletzt genannten Fall würde der absolute Meßfehler bezogen auf einen Meßweg von 100 mm unter 0,1 µm liegen.

Der Injektionsstrom läßt sich dadurch konstant halten, daß die Diode an eine stromstabilisierte, steuerbare Stromquelle angeschlossen ist. Die Abhängigkeit der Emissionswellenlänge liegt bei der Hitachi-Laser-Diode HLP 7801 E bei etwa $6,4 \times 10^{-3}$ nm/mA. Für die Absolutmessung ist dieser Einfluß zwar nicht allzu wesentlich, jedoch können höherfrequente Störungen den für den Zählung erforderlichen Kontrast wesentlich beeinflussen.

Der Erfindungsgegenstand läßt sich noch dadurch weiter vorteilhaft ausgestalten, daß der Laser-Diode zur Intensitätsmessung ein weiterer Fotodetektor zugeordnet ist, dessen Ausgangssignal über einen Analog-Digital-Wandler einem Mikrocomputer aufgeschaltet ist, in dem ein Vergleich mit einem vorgegebenen Intensitäts-Sollwert durchführbar ist, und daß das entsprechende Ausgangssignal als Korrektursignal über einen Digital-Analog-Wandler der Stromquelle für den strom der Laser-Diode zuführbar ist.

Etwaige Intensitätsschwankungen der Laserstrahlung teilen sich auf diese Weise dem weiteren Fotodetektor mit, der der Laser-Diode unmittelbar zugeordnet sein kann, so daß auf etwaige Stromschwankungen zurückgehende Intensitätsschwankungen sofort erfaßt und ausgeregelt werden können.

Bezüglich der Zustände im Strahlengang der Vorrichtung ist es gemäß einer weiteren Ausgestaltung der Erfindung besonders vorteilhaft, wenn die Ausgangssignale von Fühlern für Temperatur, Druck und Feuchte im Strahlengang über einen Analog-Digital-Wandler einem Mikrocomputer aufgeschaltet sind, in dem eine Kompensationsoperation für die genannten Größen durchführbar ist. Diese Kompensationsoperation ist eine rein rechnerische Maßnahme, d.h. die genannten Einflüsse auf das Zählergebnis werden im Rechner vor der Weiterleitung an das digitale Anzeigesystem kompensiert.

Es wurde bereits weiter eoben aufgezeigt, daß der Erfindungsgegenstand Einrichtungen zur Strabilisierung der Betriebstemperatur und des Injektionsstromes aufweisen kann, um die Betriebsparameter und damit die Emissionswellenlänge in möglichst engen Grenzen konstant zu halten. Stromstabilisierte, steuerbare bzw. einstellbare Stromquellen, sogenannte "Stromkonstanter" sind zwar heute durchaus verfügbar, jedoch wurde bereits aufgezeigt, daß es durch entsprechende Regelungsmaßnahmen gemäß Anspruch 5 auch möglich ist, ein entsprechendes Korrektursignal zu erzeugen und etwaige Abweichungen hinsichtlich des Injektionsstromes auszuregeln. Diese Maßnahmen sind als alternative Möglichkeiten zu sehen, die sich aber insbesondere auch gegenseitig unterstützen können.

Eine alternative Möglichkeit, die sich auf die optischen Vorgänge in den Strahlengängen sowie auf die elektronische Datenverarbeitung der Zählergebnisse bezieht, ist gemäß einer weiteren Ausgestaltung der Erfindung dadurch gekennzeichnet, daß neben dem Interferometer-System mit dem beweglichen Spiegel ein Referenz-Interferometer-System mit einem gegenüber den übrigen optischen Elementen feststehenden Spiegel vorhanden ist, wobei das Referenz-Interferometer-System vom Licht der gleichen Laser-Diode beaufschlagt wird, und daß der Ausgang des Referenz-Interferometer-Systems einer weiteren Zähleinrichtung für die Zählung der Hell-/Dunkel-Folgen und die Laufrichtungserkennung zum Zwecke einer Kompensationsoperation für die Wellenlängenänderungen aufgeschaltet ist.

Dieses Referenz-Interferometer-System erfaßt naturgemäß solche Änderungen der Laser-Strahlung, die auf eine Änderung der Betriebsparameter (Temperatur, Injektionsstrom) zurückzuführen sind, in gleicher bzw. analoger Weise. Das Referenz-Interferometer-System erfaßt aber auch Änderungen hinsichtlich der Dichte des Mediums im Strahlengang (Druck, Temperatur, Feuchte), Mit anderen Worten: Jegliche Änderung der Emissionswellenlänge und der Wellenlänge im Strahlengang bis zum beweglichen Spiegel führt zu einer entsprechenden Änderung im Strahlengang bis zum ortsfesten Spiegel. Dies führt auch im Referenz-Interferometer-System je nach der Größe der Zustandsänderung zu einer Hell-/Dunkel-Folge mit einem entsprechenden Zählvorgang, wobei diese Veränderungen allerdings um Größenordnungen langsamer verlaufen als beispielsweise der Verfahrbewegung des beweglichen Spiegels. Durch entsprechende mathematische Verarbeitung der beiden Zählergebnisse läßt sich eine Kompensation der genannten Einflußgrößen erzielen, ohne daß es hierzu einer komplizierten Regelung der Betriebsparameter der Laser-Diode in Verbindung mit einer Meßwerterfassung für Druck, Temperatur und Feuchte im Strahlengang bedarf.

Es sei allerdings darauf hingewiesen, daß die beschriebenen Regel- und Kompensationsmaßnahmen, die sämtlich Maßnahmen zur Beseitigung der Einflüsse von Betriebs- und Umgebungsparametern sind, auch miteinander kombiniert werden können, wodurch der schaltungstechnische Aufwand minimiert und die Anzeigegenauigkeit maximiert werden kann.

Die erfindungsgemäße Lösung ist insbesondere auch in Gegenüberstellung mit anderen bekannten inkrementalen Meßgebern zu sehen, die die handliche Form von sogenannten Meßuhren besitzen, also die Ausführung manueller Messungen an Werkstücken ermöglichen. Zu derartigen Meßgebern gehören beispielsweise Meßuhren, bei denen die Verschiebung von Glasmaßstäben mit Linienrastern in Verbindung mit Lichtquellen und Fotoempfängern Impulsfolgen liefert, die in nachgeschalteten Signalverarbeitungseinrichtungen in die gewünschten Meßergebnisse umgesetzt und bevorzugt digital zur Anzeige gebracht werden. Der Erfindungsgegenstand hat nunmehr trotz etwa gleicher Handlichkeit wie die bekannten manuellen Meßgeräte den außerordentlichen Vorteil, daß die absolute Genauigkeit um eine Zehnerpotenz höher liegt als bei den Glasmaßstäben. Derartige Glasmaßstäbe arbeiten mit einem Strichgitter, das von 10 zu 10 µm geteilt ist und zu sinusförmigen Impulsen führt. Beim Erfindungsgegenstand führt eine halbe Lichtwellenlänge zu einem sinusförmigen Impuls, wodurch die wesentlich gesteigerte Genauigkeit erzielt wird. Darüberhinaus ist der absoluten Meßgenauigkeit keine Bezugstemperatur zuzuordnen, wie dies beispielsweise in Form des Ausdehnungskoeffizienten des Werkstoffs für die Glasmaßstäbe erforderlich ist.

Der Erfindungsgegenstand ist aber nicht nur auf manuelle Längenmeßgeräte beschränkt, sondern auch und mit besonderem Vorteil anwendbar bei Längenmeßsystemen, die im Zusammenwirken mit Maschinensteuerungen und Meßmaschinensteuerungen zum Einsatz kommen. In Folge der äußerst kleinen Abmessungen zeichnet sich der Erfindungsgegenstand auch bei derartigen Meßsystemen vorteilhaft aus. Auf diese Weise ist auch ein Nachrüsten mechanischer Produktionsmaschinen mit dem Erfindungsgegenstand möglich, da dieser nur einen geringen Platzbedarf aufweist, aber alle Funktionen der aufwendigen bekannten Laser-Meßvorrichtungen aufweist. Gegenüber diesen besitzt der Erfindungsgegenstand jedoch wegen der ausschließlichen Verwendung von Halbleiterbausteinen eine höhere Lebensdauer und Unempfindlichkeit, so daß selbst bei Anwendung unter rauhen Betriebsbedingungen im Bereich von Maschinensteuerungen keine Störungen auftreten. Desgleichen ist ein Einsatz an Höhenmeßgeräten, die auch als "vertikale Längenmeßgeräte" bezeichnet werden, sowie bei Anreißgeräten mit Reißnadeln für das Einritzen von Höhenlinien über einer Bezugsplattform (Meßplatte) möglich. Desgleichen ist es möglich, die bei Handhabungsgeräten und Robotersteuerungen angewandten linearen Gittermaßstäbe durch den Erfindungsgegenstand zu ersetzen.

Um eine hohe Bewegungsgeschwindigkeit des Lagemessers bzw. des beweglichen Spiegels bei zuverlässiger Signalauswertung zu ermöglichen, ist es besonders vorteilhaft, wenn dem mindestens einen Fotodetektor ein Zählerblock nachgeschaltet ist, dessen Ausgänge einer Signalverarbeitungseinrichtung für die Umsetzung der Zählerimpulse in digitale, dem Verfahrweg des beweglichen Spiegels entsprechende Anzeigesignals für das digitale Anzeigesystem aufgeschaltet sind. Mit derartigen, handelsüblichen Zählerbausteinen sind Zählfrequenzen im MHz-Bereich zulässig.

Durch ein um 90 Grad phasenverschobenes Signal (das beispielsweise durch eine $\lambda$/4-Platte erhalten werden kann) und zwei Empfängerdioden, die zur Laufrichtungserkennung ohnehin erforderlich sind, kann in der Schaltung durch eine Exklusiv-Oder-Verknüpfung (exor-Verknüpfung) in Verbindung mit einem nachgeschalteten Flankendetektor die Zählfrequenz vervierfacht und damit eine entsprechende Erhöhung des Auflösungsvermögens bewirkt werden. Das Auflösungsvermögen erhalt dabei eine Steigerung mit gleicher Auswirkung, als ob anstelle der Laser-Diode mit einer Emissionswellenlänge von 800 nm eine solche mit einer Emissionswellenlänge von nur 200 nm verwendet würde.

Es ist besonders vorteilhaft, die Laser-Diode innerhalb eines Gehäuses unterzubringen, in dessen gegenüberliegender Wand ein Führungsrohr angeordnet ist, dessen Achse zur optischen Achse des Kollimators parallel verläuft und in dem der Taststift (Lagemelder) mit dem beweglichen Spiegel längsverschiebbar gelagert ist. Ein solches Gerät kann einschließlich aller für die Gewinnung der Meßwerte und der Anzeige benötigten funktionellen Gruppen manuell eingesetzt, d.h. in der Hand gehalten werden. Dabei sind die Strahlengänge von Meß- und Referenzlichtstrahl innerhalb des gleichen Gehäuses bzw. innerhalb Führungsrohres hermetisch gekapselt, so daß eine störende Beeinflussung der Strahlengänge durch äußere Einwirkungen nicht erfolgen kann. Es ist dabei insbesondere möglich, das Gehäuse selbst und die Führung des Taststifts im Führungsrohr abgedichtet auszubilden, so daß der gesamte innere Aufbau des Gerätes zuverlässig geschützt ist. Durch Füllung mit einem Schutzgas und Aufrechterhaltung eines Überdrucks kann die Schutzwirkung noch verbessert werden.

Wie bereits weiter oben ausgeführt wurde, eignet sich der Erfindungsgegenstand auch für Längenmeßsysteme, die im Zusammenwirken mit Maschinensteuerungen und Meßmaschinensteuerungen zum Einsatz kommen. Eine derartige Meßvorrichtung ist gemäß der weiteren Erfindung dadurch gekennzeichnet, daß die Laser-Diode mit dem Kollimator in einem Gehäuse untergebracht ist, das mit einem ersten Teil einer Maschine verbunden ist, daß der Lagemelder mit dem beweglichen Speigel mit einem zum ersten Teil relativ beweglichen zweiten Teil der Maschine verbunden ist und daß Lagemelder und Gehäuse über eine die optische Achse umhüllende, längenveränderbare Schutzeinrichtung verbunden sind. In besonders vorteilhafter Weise besteht die Schutzeinrichtung aus Teleskoprohren.

Es ist dabei hinsichtlich der festen räumlichen Zuordnung der einzelnen optischen Elemente des Interferometer-Systems besonders vorteilhaft, wenn die Laser-Diode und der Kollimator in einer Adapterhülse untergebracht sind, an deren Ende im Bereich des Kreuzungspunktes "K" von Meß- und Referenzlichtstrahl der Strahlerenteiler, das mindestens teilweise reflektierende optische Element und der mindestens eine Fotodetektor angeordnet sind.

Es ist ein wesentliches Merkmal, daß die Kohärenzlänge mindestens der zu messenden Länge entspricht. Da die Laser-Strahlen im Strahlengang etwa den doppelten Weg zurücklegen, ist es infolgedessen besonders zweckmäßig, wenn die Kohärenzlänge mindestens den zweifachen Wert der zu messenden Länge entspricht. Mit steigender Kohärenzlänge steigen die Kontraste hinsichtlich der Hell-/Dunkel-Übergänge, so daß im Hinblick auf eine Auswertung bzw. Zählung des Interferenzeffekts eine möglichst große Kohärenzlänge bei vertretbarem Aufwand anzustreben ist.

Weitere vorteilhafte Ausgestaltungen des Erfindungsgegenstandes ergeben sich aus den übrigen Unteransprüchen.

Das Meßprinzip, die grundsätzliche Signalverarbeitung sowie zwei Ausführungsbeispiele des Erfindungsgegenstandes werden nachfolgend anhand der Figuren 1 bis 6 näher erläutert.

Es zeigen:

Figur 1 eine Vorderansicht einer Meßvorrichtung für die manuelle Verwendung,

Figur 2 einen Längsschnitt durch den Gegenstand nach Figur 1 entlang der optischen Achse des Kollimators,

Figur 3 eine Prinzipskizze eines Zweistrahl-Laser-Interferometersystems in Verbindung mit einer elektrischen Signalverarbeitungseinrichtung,

Figur 4 einen Längsschnitt durch eine Meßvorrichtung für den Einsatz bei einer Maschinensteuerung,

Figur 5 eine Prinzipskizze einer Variante von Figur 3,

Figur 6 eine perspektivische Ansicht eines externen Anzeigegeräts.

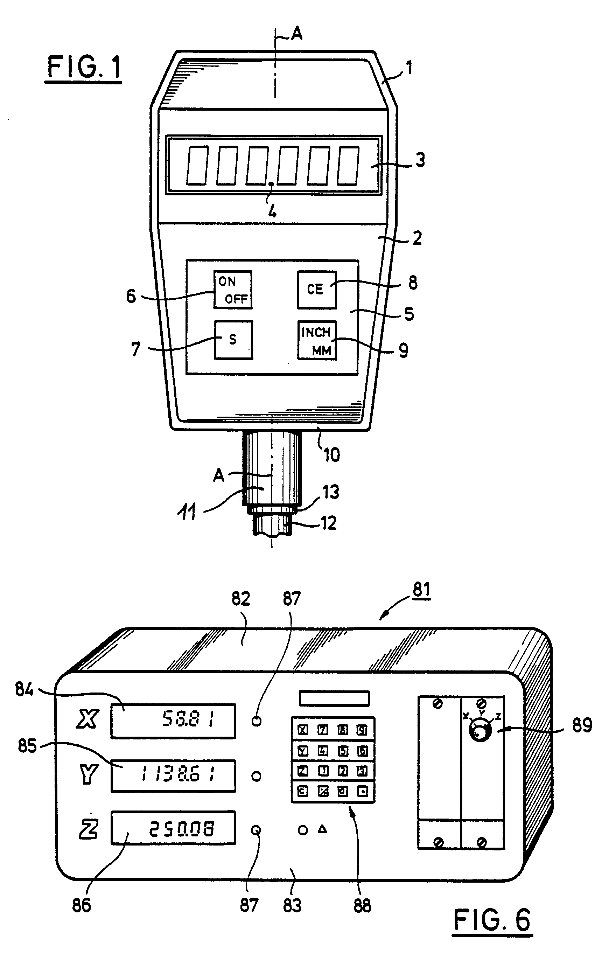

In Figur 1 ist eine Außenansicht eines Gehäuses 1 dargestellt, das auf seiner Vorderseite 2 ein digitales Anzeigesystem 3 mit drei Stellen vor und drei Stellen nach nach dem Komma 4 besitzt. Der äußerlich sichtbare Teil des Anzeigesystems ist ein LCD.

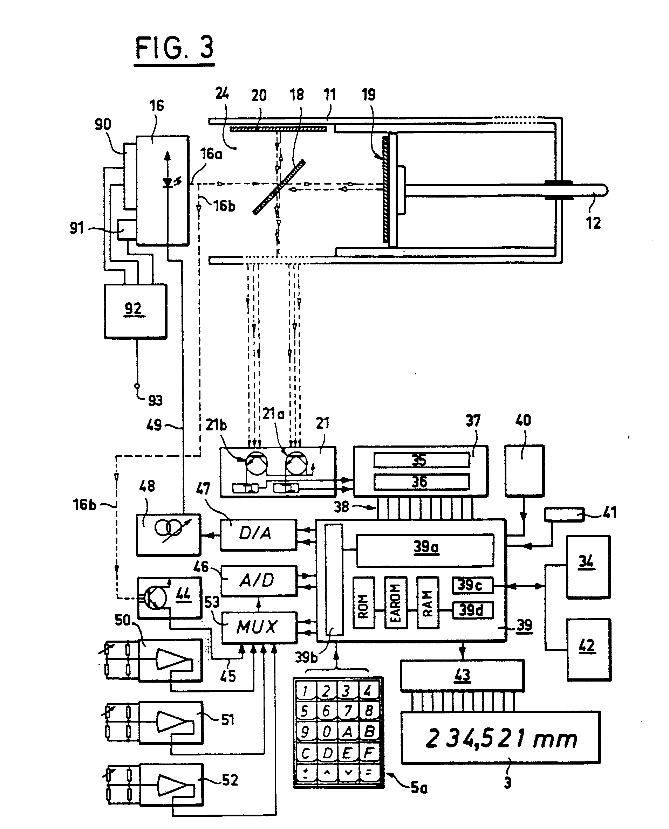

Unterhalb des Anzeigesystems 3 befindet sich ein Tastenfeld 5 mit einer EIN-AUS-Taste 6, einer Start-Taste 7, einer Lösch-Taste 8 und einer Umrechungs-Taste 9 für die wahlweise Anzeige des Meßergebnisses in Zoll und in Millimetern. Es versteht sich, daß das Tastenfeld 5 auch eine sehr viel größere Zahl von Tasten enthalten kann, um beispielsweise auch Zahlenwerte und vorgegebene Programme für bestimmte Rechenoperationen bzw. Programmabläufe eingeben zu können. Ein solches Tastenfeld 5a ist in Figur 3 dargestellt.

Das Gehäuse 1 besitzt im unteren Teil eine Wand 10, in die ein Führungsrohr 11 fest eingesetzt ist. In diesem Führungsrohr ist ein Lagemelder 12 abgedichtet geführt. Zwischen dem Lagemelder und dem Führungsrohr befindet sich noch ein weiteres Telekoprohr 13, durch das der gesamte Verschiebeweg des Lagemelders 12 noch entsprechend vergrößert wird.

Figur 3 ist im Maßstab verkleinert dargestellt, gleiche Teile sind jedoch mit gleichen Bezugszeichen versehen.

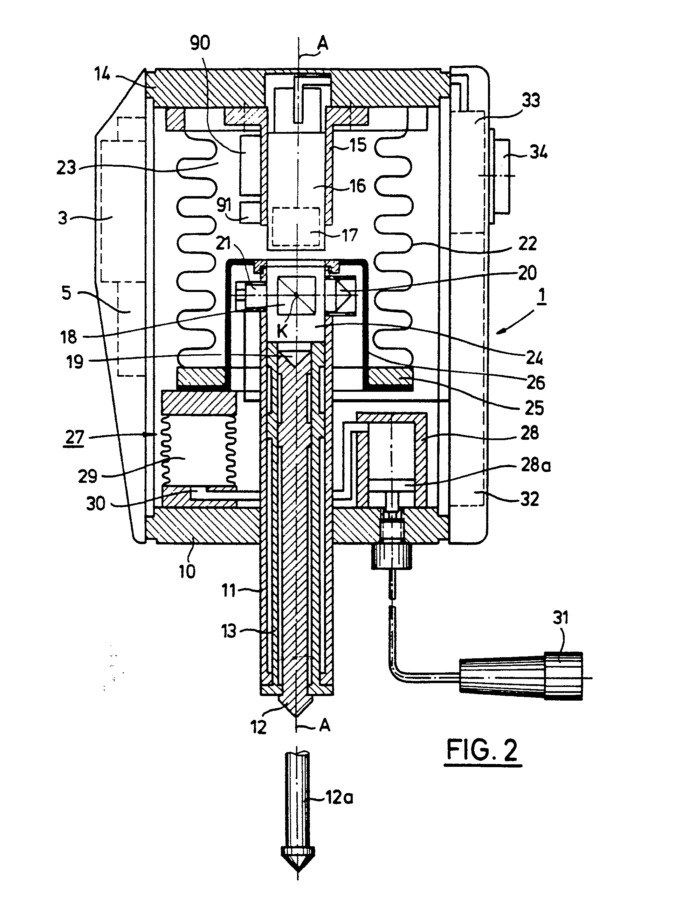

Gemäß Figur 2 besitzt das Gehäuse 1 eine obere Wand 14, an der mittels einer Adaptionshülse 15 die erfindungsgemäße Laser-Diode 16 befestigt ist. Es handelt sich um eine Laser-Diode mit der Typenbezeichnung HLP 7801 E der Firma Hitachi mit einem im vorderen Teil angeordneten und nur gestrichelt dargestellten Kollimator 17. Der Kollimator definiert eine optische Achse A—A, die gleichzeitig die Achse des gesamten Systems ist. Die aus Aluminium bestehende Adaptionshülse 15 besitzt eine seitliche Abflachung, an die eine Einrichtung 90 (Peltier-Element) zur Stabilisierung der Betriebstemperatur und ein Wärmefühler 91 gut Wärmeleitendangesetzt sind.

In der Achse A—A ist ein Strahlenteiler 18 angeordnet, durch den der Lichtstrahl in einen parallel zur optischen Achse verlaufenden Meßlichtstrahl und einen unter 90 Grad heirzu aus gerichteten Referenzlichtstrahl aufgeteilt wird. Im Strahlengang des Meßlichtstrahls ist am inneren Ende des Lagemelders 12 ein Spiegel 19 angeordnet, der als sogenannter Tripel-Spiegel ausgebildet ist und der das Licht stets parallel zur Richtung des auftreffenden Lichts versetzt reflektiert. In Richtung des um 90 Grad abgelenkten Referenzlichtstrahls ist ein ortsfestes optisches Element 20 angeordnet, das bei dem hier beschriebenen Ausführungsbeispiel gleichfalls als Tripel-Spiegel ausgebildet ist. Meßlichtstrahl und Referenzlichtstrahl haben dabei infolge der Durchlässigkeit des Strahlenteilers je etwa die Hälfte der Intensität des aus dem Kollimator 17 austretenden Lichtstrahls.

Das vom Spiegel 19 reflektierte Licht wird durch den Strahlenteiler 18 im gleichen Anteil zu einem Fotodetektor 21 umgelenkt. Der gleiche Fotodetektor wird auch von demjenigen Anteil des Referenzlichtstrahls beaufschlagt, der vom optischen Element 20 in Richtung auf den Strahlenteiler 18 reflektiert wird und in gleicher Richtung durch diesen hindurchtritt. Strahlenteiler 18, optisches Element 20 und Fotodetektor 21 sind in der gezeigten Raumlage fest in das innere Ende des Führungsrohres 11 eingebaut, und zwar im Bereich des Kreuzungspunktes "K" vom Meß- und Referenzlichtstrahl. Auf diese Weise wird vor dem Fotodetektor 21 durch Überlagerung von Meß- und Referenzlichtstrahl ein Interferenzstrahl gebildet, der bei einer Verschiebung des Spiegels 19 in Richtung der Achse A—A den weiter oben beschriebenen Einfluß auf den Fotodetektor 21 hat. Der Strahlengang des Ausführungsbeispiels nach Figur 2 entspricht dem des Michelson-Interferometers.

Im Gehäuse 1 wird durch eine druckdichte Wandung 22, die im vorliegenden Fall aus einem metallischen Faltenbalg gebildet wird, ein Teilraum 23 abgeteilt, der mit dem Innenraum 24 des Führungsrohres 11 kommuniziert. Durch eine Verringerung des Volumens des Teilraums 23 wird—da dieser nach außen hin abgedichtet ist—ein Druck aufgebaut, der sich auf die innere Stirnflächen von Lagemelder 12 und Teleskoprohr 13 überträgt und diese zum Ausfahren bzw. zu einer Berührung mit dem Meßobjekt bringt. Eine solche, ausgefahrene, Stellung ist mit 12a bezeichnet. Hierbei wird durch den Interferenzvorgang am Fotodetektor 21 eine rasche Folge von Hell-/Dunkel-Übergängen erzeugt, die sich am Ausgang des Fotodetektors 21 als elektrische Impulsfolge äußert, die in der nachgeschalteten Signalverarbeitungseinrichtung gemäß Figur 3 in anzuzeigende Meßwerte umsetzbar ist.

Gemäß Figur 2 ist der Teilraum 23 von einem Faltenbalg umgeben, in dem auch die Laser-Diode 16 untergebracht ist. Das eine Ende des Faltenbalges ist mit der Wand 14 des Gehäuses 1 druckdicht verbunden, während das andere Ende gleichfalls druckdicht mit einem beweglichen Ringflansch 25 verbunden ist, der das Führungsrohr 11 umgibt.

Eine gleichfalls druckdichte Verbindung zwischen dem Ringflansch und dem Führungsrohr wird durch eine Rollmembran 26 bewirkt, die ebenso wie der Faltenbalg als genormtes Bauteil im Handel erhältlich ist. Es ergibt sich auf diese Weise, daß eine zur Achse A—A parallele Bewegung des Ringflansches 15, dessen Hauptebene im übrigen senkrecht zur Achse A—A verläuft, eine entsprechende Verringerung des Volumens innerhalb des Teilraums 23 zur Folge hat, so daß die gewünschte Ausfahrbewegung des Lagemelders 12 erfolgt.

Um die Bewegung des Ringflansches 25 von außen herbeiführen zu können, ist dieser mit einer Antriebseinrichtung 27 verbunden, die aus einem hydraulischen Druckgeber 28 und drei auf dem Umfang äquidistant verteilten Drucknehmern 29 besteht. Die Drucknehmer 29 stützen sich auf der Wand 10 des Gehäuses 1 ab und sind mit dem Druckgeber 28 durch je eine Leitung 30 verbunden. Der Druckgeber 28 besteht aus einem nicht näher bezeichneten Zylinder und einem Kolben 28a, der von außen durch einen mechanischen Auslöser 31 betätigbar ist. Die Drucknehmer bestehen wiederum aus Faltenbälgen, jedoch versteht sich, daß auch hier ein Kolbenantrieb verwendet werden kann; umgekehrt läßt sich auch der Druckgeber 28 durch einen Faltenbalg verwirklichen. Durch die Übertragung des gleichen Drucks vom Druckgeber 28 auf mehrere Drucknehmer 29 läßt sich eine entsprechende Kraftübersetzung erzielen.

In Figur 2 sind noch gestrichelt dargestellt das Anzeigesystem 3 (LCD), das Tastenfeld 5 sowie eine Signalverarbeitungseinrichtung 32, die anhand von Figur 3 noch näher erläutert wird. In einem Batteriefach ist eine Batterie 33 angeordnet; mittels eines externen Anschlusses 34 (Vielfach-Steckverbindung) können Anschlüsse am Maschinensteuerungen, externe Programmspeicher, Rechner und Drucker hergestellt werden.

In Figur 3 sind wiederum gleiche Teile bzw. Teile mit gleicher Funktion mit gleichen Bezugszeichen versehen. Der im Bereich des Interferenzstrahles angeordnete, jedoch erheblich größer dargestellte Fotodetektor 21 enthält zwei Fototransistoren 21a und 21b, die in Verschieberichtung des Lagemelders 12 um ein solches Maß versetzt angeordnet sind, daß die Hell-/Dunkel-Impulse mit einer Phasenverschiebung von 90 Grad auftreten. Die beiden Signalfolgen dienen zur Richtungserkennung in einer Richtungs-Schaltung 35, die ebenso wie ein Zählerblock 36 Teil eines Zählermoduls 37 ist. Als Zählerblöcke können bevorzugt Vor- und Rückwärtszähler CMOS Typ 4516 und TDL Typ 74 LF 193 verwendet werden. Vom Zählermodul 37 führen mehrere Ausgänge 38 zu einem Mikrocomputer 39, der unter der Typenbezeichnung "80 C 49" von der Firma NEC, Japan hergestellt wird. Es handelt sich hierbei um einen 8-Bit-Rechner, der bei Erfordernis umfangreicherer Rechenoperationen (Messung und Regelung) auch durch einen entsprechenden 16-Bit-Rechner ersetzt werden kann. Der Mikrocomputer 39 besitzt einen Prozessor 39a, einen Parallel-Eingang/Ausgang 39b, Decoder 39c und 39d sowie Spiecherblöcke, die mit ihren Funktionen ROM, EAROM und RAM bezeichnet sind. Der Mikrocomputer 39 erhält seine Zeitimpulse von einem Takt-Generator 40. Durch eine Rückstelltaste 41 können sämtliche Zähler zurückgestellt werden. Der externe Anschluß 34 wurde bereits anhand von Figur 2 erläutert; ein weiterer externer Anschluß 42 kann mit einem nicht dargestellten Rechner verbunden werden.

Der Mikrocomputer 39 erhält seine Eingabebefehle über das bereits beschriebene Tastenfeld 5a. Es ist über eine Anzeige-Kontrollschaltung 43 mit dem Anzeigesystem 3 verbunden.

In Übereinstimmung mit Figur 3 sind an die Laser-Diode 16 in gut wärmeleitender Verbindung eine Einrichtung 90 zur Stabilisierung der Betriebstemperatur und ein Wärme fühler 91 angesetzt. Vom Wärmefühler 91 führt eine Signalleitung zu einem analogen Regler 92, der seine Versorgungsspannung über eine Klemme 93 erhält. Der Regler 92 ist über zwei nicht näher bezeichnete Leitungen wiederum mit der Einrichtung 90 verbunden, so daß es auf diese Weise möglich ist, die Betriebstemperatur der Laser-Diode 16 innerhalb außerordentlich enger Grenzen auf einen konstanten Wert zu regeln.

Aus dem von der Laser-Diode 16 kommenden Lichtstrahl 16a wird noch vor dem Strahlenteiler 18 ein Teilstrahl 16b ausgeblendet, der zu einem weiteren Fotodetektor 44 geführt wird. Dieser dient zur Intensitätsmessung und gibt sein Ausgangssignal über eine Leitung 45 und einen Analog-Digital-Wandler 46 in dem Mikrocomputer 39 ein. In diesem findet ein Vergleich mit einem vorgegebenen Intensitätswert statt, und etwaige Abweichungen werden durch einen Digital-Analog-Wandler 47 als Korrektur-Signal einer auf einen konstanten Strom steuerbaren Stromquelle 48 zugeführt, deren Ausgang über eine Leitung 49 mit der Laser-Diode 16 verbunden ist. Auf die angegebene Weise wird die Laser-Diode 16 auf konstante Emissionsdaten (Wellenlänge, Intensität) geregelt.

Dem Mikrocomputer 39 sind noch die Ausgänge von Fühlern 50, 51 und 52 aufgeschaltet, die in Wirklichkeit im Strahlengang, d.h. im Führungsrohr 11 angeordnet sind, und zwar ist der Fühler 50 ein Temperaturfühler, der Fühler 51 ein Druckfühler und der Fühler 52 ein Feuchtigkeitsfühler.

Die Aufschaltung der Ausgänge dieser Fühler erfolgt ebenso wie die des Ausgangs des Fotodetektors 44 über einen Multiplexer 53, d.h. die Abfrage erfolgt in zeitlichen Intervallen. In dem Mikrocomputer 39 wird eine Kompensationsoperation für die genannten Meßwerte durchgeführt.

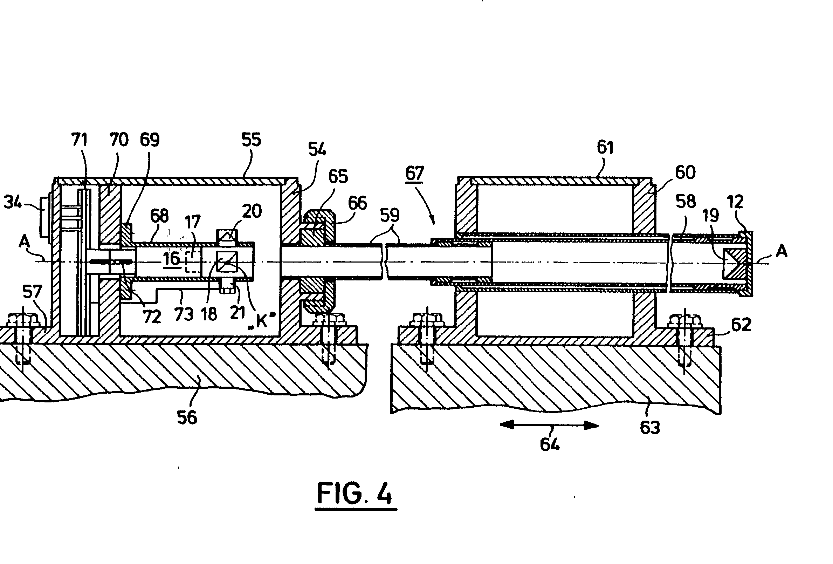

Bei dem Ausführungsbeispiel gemäß Figur 4 ist die Laser-Diode 16 mit dem Kollimator 17 in einem Gehäuse 54 mit einem Deckel 55 untergebracht. Das Gehäuse ist mit einem ersten Teil 56 einer Maschine, beispielsweise mit dem Maschinenbett verbunden, und zwar über einen Befestigungsflansch 57. Auf diese Weise wird das Gehäuse 54 stationär gehalten. Der Lagemelder 12 ist im vorliegenden Falle ist äußerstes Führungsrohr für Telekoprohre 58 und 59 ausgebildet. Der Lagemelder 12 ist in einem weiteren Gehäuse 60 mit einem Deckel 61 untergebracht, das über einen Befestigungsflansch 62 mit einem zweiten Teil 63 der Maschine verbunden ist. Dieses zweite Teil 63 ist im vorliegenden Falle in Richtung des Doppelpfeils 64 in Richtung der Achse A—A verschiebbar; es kommt jedoch hier lediglich auf die Relativbewegung zwischen den einzelnen Baugruppen an. Bei dem Teil 63 handelt es sich beispielsweise um den Support einer Werkzeugmaschine.

Der bewegliche Spiegel 19 ist am inneren Ende des Lagemelders 12 in der Weise angebracht, daß das von ihm reflektierte Licht in Richtung der Achse A—A (Kollimatorachse) bzw. parallel hierzu reflektiert wird. Der Abstand dieses Spiegels entspricht infolgedessen exakt der Lage des beweglichen Teils 63. Die Telekoprohre 58 und 59 verlaufen koaxial zur Achse A—A und sind gut abgedichtet ineinander sowie in dem gleichfalls als Rohr ausgebildeten Lagemelder 12 geführt. Das am weitesten gegenüber dem Lagemelder 12 verfahrbare Teleskoprohr 59 besitzt einen Flansch 65, durch den es mittels einer Überwurfmutter 66 mit dem Gehäuse 54 verbunden ist. Lagemelder 12 und Teleskoprohre 58, 59 bilden zusammen eine Schutzeinrichtung 67 für den Meßlichtstrahl auf seinem Wege zum Spiegel 19 und zurück.

Wie aus Figur 4 weiter zu erkennen ist, sind Laser-Diode 16 und Kollimator 17 in einer Adapterhülse 68 angeordnet, an deren Ende im Bereich des Kreuzungspunktes "K" von Meß- und Referenzlichtstrahl der Strahlenteiler 18, das mindestens teilweise reflektierende optische Element 20 und der mindestens eine Fotodetektor 21 angeordnet sind. Die Adapterhülse 68 fluchtet dabei mit der Schutzeinrichtung 67. Die Adapterhülse 68 ist über einen Flansch 69 mit einer Trennwand 70 im Gehäuse 54 verbunden, hinter der sich eine Platine 71 mit der Signalverarbeitungseinrichtung (nicht dargestellt) befindet. Mit dieser Platine ist sowohl die Laser-Diode 16 über eine Steckverbindung 72 als auch der Fotodetektor 21 über eine Leitung 73 verbunden. Von der Platine 74 führen nicht näher bezeichnete Leitungen zu einem externen Anschluß 34.

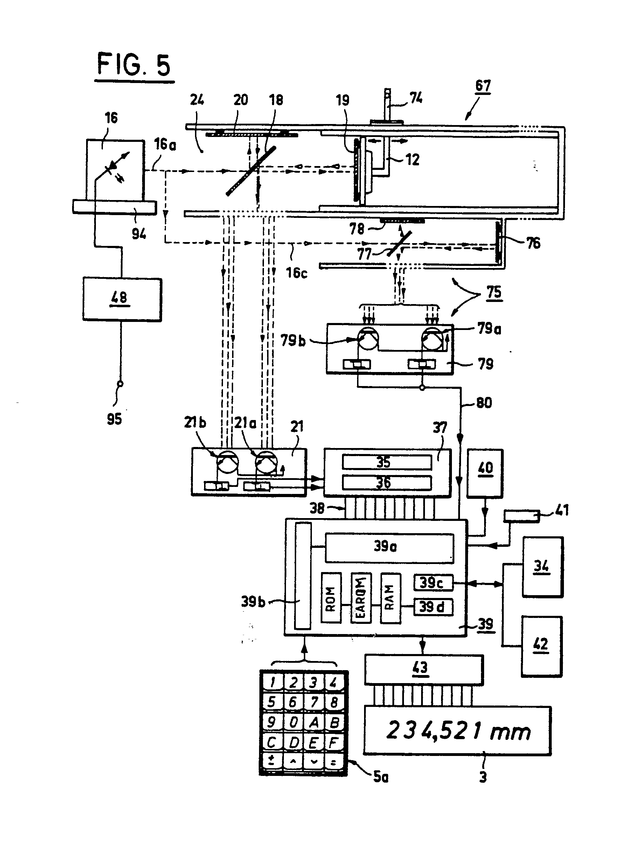

Figur 5 zeigt im oberen Teil eine analoge Einrichtung wie Figur 4 jedoch mit dem Unterschied, daß der Lagemelder 12 in Form eines radialen Auslegers ausgebildet ist, der durch die Schutzeinrichtung 67 hindurchgeführt ist. Der Lagemelder 12 trägt an seinem inneren Ende den verschiebbaren Spiegel 19 und an seinem äußeren freien Ende eine Tasteinrichtung 74 für die Erfassung der Position eines Werkstücks etc.

Gemäß Figur 5 ist dem Interferometersystem mit dem beweglichen Spiegel 19 ein Referenz-Interferometersystem 75 mit einem gegenüber den übrigen optischen Elementen feststehenden Spiegel 76 angeordnet. Die übrigen optischen Elemente werden in analoger Weise durch einen Strahlenteiler 77 und einen weiteren feststehenden Spiegel 78 gebildet. Das Referenz-Interferometersystem 75 erhält Laserlicht von der gleichen Laser-Diode 16, indem durch entsprechende, im einzelnen nicht dargestellte optische Elemente ein weiterer Strahlengang 16c ausgeblendet wird. Zum Referenz-Interferometersystem 75 gehört weiterhin ein Fotodetektor 79, der in analoger Weise wie die Fotodetektor 21 aus zwei Fototransistoren 79a und 79b besteht, welche den Durchgang von Hell-Dunkel-Übergängen ebenso erkennen, wie deren Laufrichtung. Durch Das Referenz-Interferometersystem ist es möglich, sämtliche Veränderungen im Interferometersystem in proportionaler Weise zu erkennen und damit die Vorgänge im Interferometersystem zu kompensieren.

Zu diesem Zweck ist der Ausgang des Referenz-Interferometersystems über eine Leitung 80 dem Mikrocomputer 39 aufgeschaltet, in dem eine weitere, hier nicht dargestellte, Zähleinrichtung für die Zählung der Hell-/Dunkel-Folgen und die Laufrichtungserkennung angeordnet ist, deren Zählergebnis unter Berücksichtigung des Vorzeichens zu dem Zählergebnis des Haupt-Interferometer-Systems hinzu addiert wird. Der Laser-Diode 16 ist im vorliegenden Fall lediglich ein Kühlkörper 94 angeordnet, der in gewissen Grenzen einen Temperaturanstieg zuläßt, jedoch übermäßige Temperaturen der Laser-Diode 16 verhindert. Derartige Kühlkörper sind von Halbleiterschaltungen her bekannt und werden daher nicht näher erläutert.

Die Laser-Diode 16 erhält ihren Betriebsstrom (Injektionsstrom) über eine Stromquelle 48, die hier jedoch nicht geregelt, sondern lediglich auf einen konstanten Strom eingestellt ist. Die Stromquelle 48 erhält den Betriebsstrom über einen Klemme 95. In weiteren Merkmalen stimmt die Signalverarbeitungseinrichtung nach Figur 5 mit derjenigen nach Figur 3 überein, so daß die gleichen Bezugszeichen verwendet wurden. Es ist jedoch erkennbar, daß die Fühler 50 bis 52 und jegliche Regeleingriffe für die Laser-Diode 16 hier fehlen, und daß eine Kompensationshandlung lediglich über das Referenz-Interferenzsystem 75 und den Mikrocomputer 39 durchgeführt wird.

Figur 6 zeigt ein externes Anzeigegerät 81, das beispielsweise mit den externen Ausgängen 34 von drei Interferometersystemen gemäß den Figuren 4 und 5 verbunden ist. Deren Achsen sind an einer Maschine im X—Y—Z-Koordinatensystem angeordnet, so daß eine räumliche Erfassung von Meßobjekten möglich ist. Das Gerät besitzt ein Gehäuse 82 mit einer Vorderseite 83, in der drei Anzeigefelder 84, 85 und 86 für die Koordinaten X, Y und Z angeordnet sind. Rechts daneben befinden sich Rückstelltasten 87 für die Rückstellung der einzelnen Anzeigen. Wiederum rechts daneben befindet sich ein Tastenfeld 88, mit dem Sollwerte für die Koordinaten X, Y und Z eingegeben und bestimmte Programme und Rechenoperationen ausgelöst werden können. Die Vorderseite besitzt schließlich noch einen Wahlschalter 89 für die Einstellung der jeweils gewünschten Koordinaten. Das externe Anzeigegerät läßt sich sehr einfach an einer Maschine anbringen und ermöglicht eine zentrale Überwachung der Meßergebnisse auf kleinstem Raum.

**Patentansprüche**

1. Längenmeßvorrichtung nach dem Zweistrahl-Laser-Interferometerprinzip, mit einer von einer Stromquelle (48) versorgten Laser-Lichtquelle (16), einem in deren optischer Achse (A—A) angeordneten Strahlenteiler (18) für die Aufteilung des Lichtstrahls in einen Meßlichtstrahl und einen im Winkel hierzu ausgerichteten Referenzlichtstrahl, mit einem den Meßlichtstrahl mit Querversatz parallel zur optischen Achse reflektierenden beweglichen, mit einem Lagemelder (12) verbundenen Spiegel (19), der über einen vorgegebenen Verschiebeweg verschiebbar ist, mit mindestens einem weiteren teilweise reflektierenden optischen Element (20) d.h. zweiter Spiegel oder zweiter Strahlenteiler, mit mindestens einem im Interferenzbereich der Strahlengänge liegenden Fotodetektor (21), dessen Ausgang bzw. deren Ausgänge einer Auswerteschaltung (37) mit einer Zähleinrichtung (36) für die Zählung der Hell-Dunkel-Folgen einschließlich einer Richtungserkennung und mit einem digitalen Anzeigesystem (3) aufgeschaltet sind, und mit einer Einrichtung (50, 51, 52, 39 bzw. 75, 39) zur Beseitigung der die Wellenlänge in den Strahlen-gängen verändernden Einflüsse der Umgebungs-parameter Temperatur, Druck und Feuchte, worin die Laser- Lichtquelle eine Laser-Diode (16) mit einem Kollimator (17) für die Erzeugung von sowohl lateral, transversal und longitudinal mono-modigem Laserlicht mit einer Kohärenzlänge ist, die mindestens dem Verschiebeweg des Lagemelders entspricht, und die Längenmeßvorrichtung mindestens eine Einrichtung (48; 90, 91, 92; 94, 75, 39) zur Beseitigung der Einflüsse der Abhängigkeit der Laser-Diode (16) von ihren Betriebsparametern Temperatur und Injektionsstrom aufweist.

2. Längenmeßvorrichtung nach Anspruch 1, dadurch gekennzeichnet, daß die Laser-Diode (16) eine solche mit einer Emissionswellenlänge von 800 nm ist.

3. Längenmeßvorrichtung nach Anspruch 1, dadurch gekennzeichnet, daß die Laser-Diode (16) eine Einrichtung zur Stabilisierung ihrer Betriebstemperatur aufweist.

4. Längenmeßvorrichtung nach Anspruch 1, dadurch gekennzeichnet, daß die Laser-Diode (16) an eine stromstabilisierte, steuerbare Stromquelle (48) angeschlossen ist.

5. Längenmeßvorrichtung nach Anspruch 4, dadurch gekennzeichnet, daß der Laser-Diode (16) zur Intensitätsmessung ein weiterer Fotodetektor (44) zugeordnet ist, dessen Ausgangssignal über einen Analog-Digital-Wandler (46) einem Mikrocomputer (39) aufgeschaltet ist, in dem ein Vergleich mit einem vorgegebenen Intensitäts-Sollwert durchführbar ist, und daß das entsprechende Ausgangssignal als Korrektursignal über einen Digital-Analog-Wandler (47) der Stromquelle (48) für den Strom der Laser-Diode (16) zuführbar ist.

6. Längenmeßvorrichtung nach Anspruch 5, dadurch gekennzeichnet, daß die Ausgangssignale von Fühlern (50, 51, 52) für Temperatur (50), Druck (51) und Feuchte (52) im Strahlengang über einen Analog-Digital-Wandler (46) einem Mikrocomputer (39) aufgeschaltet sind, in dem eine Kompensationsoperation für die genannten Größen durchführbar ist.

7. Längenmeßvorrichtung nach Anspruch 1, dadurch gekennzeichnet, daß neben dem Interferometersystem mit beweglichem Spiegel (19) ein Referenz-Interferometersystem (75) mit einem gegenüber den übrigen optischen Elementen feststehenden Spiegel (76) vorhanden ist, welches Referenz-Interferometersystem (75) vom Licht der gleichen Laser-Diode (16) beaufschlagt ist, und daß der Ausgang des Referenz-Interferometersystems (75) einer weiteren Zähleinrichtung für die Zählung der Hell-/Dunkel-Folgen und die Laufrichtungserkennung zum Zwecke einer Kom-pensationsoperation für die Wellenlängenände-rung aufgeschaltet ist.

8. Längenmeßvorrichtung nach Anspruch 1, dadurch gekennzeichnet, daß die Signalverarbei-tungseinrichtung einen Mikrocomputer (39) auf-weist, der in der Weise ausgelegt und geschaltet ist, daß wahlweise eine Anzeige des maximalen, des minimalen oder eines optimierten Meßwertes oder der Relation des Meßwertes zu einem Toleranzfeld durchführbar ist.

9. Längenmeßvorrichtung nach Anspruch 8, dadurch gekennzeichnet, daß der Mikrocomputer (39) einen Programmspeicher für mindestens ein Meßprogramm und dessen Meßwertverarbeitung aufweist.

10. Längenmeßvorrichtung nach Anspruch 9, dadurch gekennzeichnet, daß der Programmspeicher zur Aufnahme von Rechenprogrammen zur Signalverarbeitung ausgelegt ist.

11. Längenmeßvorrichtung nach Anspruch 1, dadurch gekennzeichnet, daß drei Längenmeßvorrichtungen in einem X—Y—Z-Koordinatensystem angeordnet sind und daß deren Ausgänge einem gemeinsamen Anzeigegerät (81) aufgeschaltet sind.

12. Längenmeßvorrichtung nach Anspruch 1, dadurch gekennzeichnet, daß die Laser-Diode (16) innerhalb eines Gehäuses (1) untergebracht ist, in dessen gegenüberliegender Wand (10) ein Führungsrohr (11) angeordnet ist, dessen Achse zur optischen Achse (A—A) des Kollimators (17) parallel verläuft und in dem der als Taststift ausgebildete Lagemelder (12) mit dem beweglichen Spiegel (19) längsverschiebbar gelagert ist.

13. Längenmeßvorrichtung nach Anspruch 12, dadurch gekennzeichnet, daß der Strahlenteiler (18), das mindestens teilweise refeltierende optische Element (20) und der mindestens eine Fotodetektor (21) am inneren Ende des Führungsrohres (11) im Bereich des Kreuzungspunkts "K" von Meß- und Referenzlichtstrahl angeordnet sind.

14. Längenmeßvorrichtung nach Anspruch 12, dadurch gekennzeichnet, daß das digitale Anzeigesystem (3) in das Gehäuse (1) mit der Laser-Diode (16) integriert ist.

15. Längenmeßvorrichtung nach Anspruch 1, dadurch gekennzeichnet, daß die Laser-Diode (16) mit dem Kollimator (17) in einem Gehäuse (54) untergebracht ist, das mit einem ersten Teil (56) einer Maschine verbunden ist, daß der Lagemelder (12) mit dem beweglichen Spiegel (19) mit einem zum ersten Teil (56) relativ beweglichen zweiten Teil (63) der Maschine verbunden ist, und daß Lagemelder (12) und Gehäuse (54) über eine die optische Achse (A—A) umhüllende, längenveränderbare Schutzeinrichtung (67) verbunden sind.

16. Längenmeßvorrichtung nach Anspruch 15, dadurch gekennzeichnet, daß der Lagemelder (12) in einem weiteren Gehäuse (60) untergebracht ist, das mit dem zweiten Teil (63) der Maschine verbunden ist.

17. Längenmeßvorrichtung nach Anspruch 15, dadurch gekennzeichnet, daß Laser-Diode (16) und Kollimator (17) in einer Adapterhülse (68) untergebracht sind, an deren Ende im Bereich des Kreuzungspunktes "K" von Meß- und Referenzlichtstrahl der Strahlenteiler (18), das mindestens teilweise reflektierende optische Elementt (20) und der mindestens eine Fotodetektor (21) angeordnet sind.

## Revendications

1. Dispositif de mesure des longueurs selon le principe de l'interféromètre à laser à double faisceau, constitué d'une source de lumière laser (16) alimentée par une source de courant (48), d'un diviseur de faisceau (18) disposé dans son axe optique (A—A) dans le but de diviser le faisceau lumineux en un faisceau lumineux de mesure et un faisceau lumineux de référence orienté par rapport à ce dernier en formant un angle, d'un miroir mobile (19), solidaire d'un capteur de position (12), réfléchissant le faisceau lumineux de mesure parallèlement à l'axe optique avec un décalage transversal et pouvant se déplacer sur une course prédéterminée, d'au moins un autre élément optique partiellement réfléchissant (20), c'est-à-dire d'un second miroir ou d'un second diviseur de faisceau, d'au moins un photodétecteur (21) placé dans la zone d'interférence des faisceaux, dont la ou les sorties peuvent être reliées à un circuit d'analyse (37) avec un dispositif de comptage (36) destiné à compter les transitions clair-foncé et à identifier leur sens de déplacement, et un système d'affichage numérique (3), et d'un dispositif (50, 51, 52, 39 ou 75, 39) destiné à éliminer les influences sur la longueur d'onde sur le trajet des rayons des paramètres d'environnement que sont la température, la pression et l'humidité, où la source de lumière laser est une diode laser (16) avec un collimateur (17) pour la production de lumière laser monomode aussi bien dans les directions latérale, transversale et longitudinale avec une longueur de cohérence qui correspond au moins à la course de déplacement du capteur de position et où le dispositif de mesure des longueurs présente au moins un dispositif (48; 90, 91, 92; 94, 75, 39) d'élimination des influences dues à la sensibilité de la diode laser (16) à ses paramètres de fonctionnement que sont la température et le courant d'injection.

2. Dispositif de mesure des longueurs selon la revendication 1, caractérisé en ce que la diode laser (16) possède une longueur d'onde d'émission de 800 nm.

3. Dispositif de mesure des longueurs selon la revendication 1, caractérisé en ce que la diode laser (16) possède un dispositif de stabilisation de sa température de fonctionnement.

4. Dispositif de mesure des longueurs selon la revendication 1, caractérisé en ce que la diode laser (16) est reliée à une source de courant (48) stabilisée en courant et pouvant être commandée.

5. Dispositif de mesure des longueurs selon la revendication 4, caractérisé en ce que la diode laser (16) est montée avec un second photodétecteur (44) destiné à la mesure de l'intensité, dont la sortie est envoyée par un convertisseur analogique-numérique (46) à un micro-ordinateur (39) au sein duquel peut être opérée une comparaison avec une intensité de consigne prédéterminée, et en ce que le signal de sortie correspondant est envoyé comme signal de correction par un convertisseur numérique-analogique (47) à la source de courant (48) afin de corriger le courant de la diode laser (16).

6. Dispositif de mesure des longueurs selon la revendication 5, caractérisé en ce que les signaux de sortie des capteurs (50, 51, 52) pour la température (50), la pression (51) et l'humidité (52) dans le trajet des rayons sont envoyés par un convertisseur analogique-numérique (46) à un micro-ordinateur (39) au sein duquel peut être opérée une compensation de ces grandeurs.

7. Dispositif de mesure des longueurs selon la revendication 1, caractérisé en ce que, outre le système interférométrique à miroir mobile (19), il existe un système interférométrique de référence (75) doté d'un miroir (76) fixe par rapport aux autres éléments optiques, ce système interférométrique de référence (75) recevant la lumière de la même diode laser (16), et en ce que la sortie du système interférométrique de référence (75) est envoyée à un second dispositif de comptage pour le comptage des transitions clair-foncé et pour la détection du sens de déplacement, afin de réaliser une compensation des variations de la longueur d'onde.

8. Dispositif de mesure des longueurs selon la revendication 1, caractérisé en ce que le dispositif de traitement des signaux possède un micro-ordinateur (39) qui est conçu et monté de manière à pouvoir au choix afficher la valeur maximale, la valeur minimale, la valeur optimisée ou encore la relation de la valeur de mesure à un écart de tolérance.

9. Dispositif de mesure des longueurs selon la revendication 8, caractérisé en ce que le micro-ordinateur (39) possède une mémoire de programme pour au moins un programme de mesure et le traitement de la valeur de mesure.

10. Dispositif de mesure des longueurs selon la revendication 9, caractérisé en ce que la mémoire de programme est conçue pour recevoir des programmes de calcul destinés au traitement des signaux.

11. Dispositif de mesure des longueurs selon la revendication 1, caractérisé en ce que trois dispositifs de mesure des longueurs sont disposés dans un système de coordonnées X—Y—Z et en ce que leurs sorties sont envoyées à un appareil d'affichage (81) commun.

12. Dispositif de mesure des longueurs selon la revendication 1, caractérisé en ce que la diode laser (16) est logée dans un boîtier (1) dont la paroi opposée (10) porte un tube de guidage (11) dont l'axe est parallèle à l'axe optique (A—A) du collimateur (17) et dans lequel le capteur de position (12) prenant la forme d'un photostyle peut être déplacé longitudinalement avec le miroir mobile (19).

13. Dispositif de mesure des longueurs selon la revendication 12, caractérisé en ce que le diviseur de faisceau (18), l'élément optique au moins partiellement réfléchissant (20) et le premier et éventuellement seul photodétecteur (21) sont disposés à l'extrémité intérieure du tube de guidage (11) au niveau du point d'intersection K du faisceau lumineux de mesure et du faisceau lumineux de référence.

14. Dispositif de mesure des longueurs selon la revendication 12, caractérisé en ce que le système d'affichage numérique (3) est intégré au boîtier (1) contenant la diode laser (16).

15. Dispositif de mesure des longueurs selon la revendications 1, caractérisé en ce que la diode (16) et son collimateur (17) sont logés dans un boîtier (54) qui est solidaire d'une première partie (56) d'une machine, en ce que le capteur de position (12) avec son miroir mobile (19) est solidaire d'une seconde partie (63) de la machine pouvant subir des mouvements relatifs par rapport à la première partie (56), et en ce que le capteur de position (12) et le boîtier (54) sont reliés par un dispositif de protection (67) enveloppant l'axe optique (A—A) et de longueur variable.

16. Dispositif de mesure des longueurs selon la revendication 15, caractérisé en ce que le capteur de position (12) est logé dans un autre boîtier (60) qui est solidaire de la seconde partie (63) de la machine.

17. Dispositif de mesure des longueurs selon la revendication 15, caractérisé en ce que la diode laser (16) et le collimateur (17) sont montés dans une douille d'adaptation (68) à l'extrémité de laquelle, au niveau du point d'intersection K du faisceau lumineux de mesure et du faisceau luineux de référence, sont disposés le diviseur de faisceau (18), l'élément optique au moins partiellement réfléchissant (20) et le premier et éventuellement seul photodétecteur (21).

**Claims**

1. Device for measuring length according to the double-gap laser interferometer principle, including a laser-light source (16), supplied by a current source (48), a beam divider (18), arranged in their optical axis (A—A), for the division of the lightbeam into a measuring-lightbeam and a reference-lightbeam aligned at an angle thereto, with a movable mirror (19), which reflects the measuring-lightbeam transversely offset parallel to the optical axis and is connected to a position indicator (12), which mirror is slidable via a predetermined slide path, with at least one further partially reflecting optical element (20), second mirror or second beam divider, with at least one photo detector (21) arranged within the interference range of the beam paths the output(s) is/are assigned to an evaluating circuit (37) including a counting device (36) for counting light-dark sequences including a direction detector and with a digital readout (3), and with a means (50, 51, 52, 39 or 75, 39 respectively) to remove influences of environmental parameter temperature, pressure and humidity which change the wavelength in the beam paths, in which respect the laser-light source is a laser diode (16) with collimator (17) for the production of both lateral, transverse and longitudinal monomode laser light with a coherence length which at least equals the slide path of the position indicator, and the device for measuring length includes at least one means (48; 90, 91, 92; 94, 75, 39) to remove the influences of dependency of the laser diode (16) from their operating parameters temperature and injection current.

2. Device for measuring length according to claim 1, characterised in that the laser diode (16) is one with an emission wavelength of 800 nm.

3. Device for measuring length according to claim 1, characterised in that the laser diode (16) includes a means to stabilise its operating temperature.

4. Device for measuring length according to claim 1, characterised in that the laser diode (16) is connected to a current-stabilised, controllable current source (48).

5. Device for measuring length according to claim 4, characterised in that the laser diode (16) is associated with a further photo detector (44) for intensity measuring, the output signal of which is assigned via an analog-digital-converter (46) to a microcomputer (39) in which a comparison with a predetermined nominal intensity value is made, and that the corresponding output signal is supplied as a correction signal via a digital-analog converter (47) to the current source (48) for the current of the laser diode (16).

6. Device for measuring length according to claim 5, characterised in that the output signals of sensors (50, 51, 52) for temperature (50), pressure (51) and humidity (50) in the beam path are associated via an analog-digital converter (46) with a microcomputer (39) in which a compensation operation for the listed values is executed.

7. Device for measuring length according to claim 1, characterised in that alongside the interferometer system with movable mirror (19) is arranged a reference-interferometer system (75) with a mirror (76) which is fixed relative to the other optical elements, which reference-interferometer system (75) is loaded with the light of the same laser diode (16), and that the output of the reference-interferometer system (75) is associated with a further counting device for counting the light-dark sequences and the course identification for the purpose of a compensation operation for the change in wavelength.

8. Device for measuring length according to claim 1, characterised in that the signal-processing device includes a microcomputer (39) which is arranged and switched in such a manner that selectively an indication of the maximum, the minimum or an optimised measuring value or the relation of the measuring value to a tolerance field is given.

9. Device for measuring length according to claim 8, characterised in that the microcomputer (39) includes a program memory for at least one measuring program and its data processing.

10. Device for measuring length according to claim 9, characterised in that the program memory is laid out to accept calculation programs for signal processing.

11. Device for measuring length according to claim 1, characterised in that three length-measuring devices are arranged in an X—Y—Z-coordinates system, and that their outputs are associated with a common indicator unit (81).

12. Device for measuring length according to claim 1, characterised in that the laser diode (16) is accommodated inside a housing (1), in the opposite wall (10) of which is arranged a guide tube (11) the axis of which extends parallel to the optical axis (A—A) of the collimator (17), and wherein the position indicator (12), arranged to be a tracer pin, is mounted to be longitudinally displaceable with the movable mirror (19).

13. Device for measuring length according to claim 12, characterised in that the beam divider (18), the at least partially reflecting optical element (20) and the at least one photodetector (21) are arranged at the inner end of the guide tube (11) in the region of the intersecting point "K" of measuring- and reference-light beam.

14. Device for measuring length according to claim 12, characterised in that the digital readout (3) is integrated into the housing (1) with laser diode (16).

15. Device for measuring length according to claim 1, characterised in that the laser diode (16) and collimator (17) are accommodated in a housing (54) which is connected to a first part (56) of a machine, that the position indicator (12) with movable mirror (19) is connected to a second part (63), movable relative to the first part (56), of the machine, and that the position indicator (12) and housing (54) are connected via a protective means (67) which encapsules the optical axis (A—A) and is changeable in length.

16. Device for measuring length according to claim 15, characterised in that the position indicator (12) is accommodated in a further housing (60) which is connected to the second part (63) of the machine.

17. Device for measuring length according to claim 15, characterised in that the laser diode (16) and collimator (17) are accommodated in an adapter sleeve (68), at the end of which, in the region of the intersecting point "K" of measuring- and reference-lightbeam of the beam divider (18), is arranged the at least partially reflecting optical element (20) and the at least one photo detector (21).

FIG. 1

A

1

3

4

2

6 ON OFF

8 CE

5

7 S

9 INCH MM

10

A

11

13

12

82  87  81

84  X  58.81

87

85  Y  1138.61

89

86  Z  250.08

87  83  88

FIG. 6

1

FIG. 2

# FIG. 3

FIG. 4

## FIG. 5

234,521 mm